# EUROPÄISCHE PATENTSCHRIFT

(11) **EP 1 151 248 B1**
(45) Veröffentlichungstag und Bekanntmachung des Hinweises auf die Patenterteilung: **14.04.2004**
(21) Anmeldenummer: 99964472.7
(22) Anmeldetag: 29.12.1999
(51) Int. Cl.: G01D 5/20

(54) **WEG- UND/ODER WINKELAUFNEHMER MIT MÄANDERFÖRMIGER MESSWICKLUNG**
DISPLACEMENT AND/OR ANGLE SENSOR COMPRISING A MEANDERING MEASURING WINDING
CAPTEUR DE DEPLACEMENTS ET/OU D'ANGLES POURVU D'UN ENROULEMENT DE MESURE EN MEANDRE

(30) Priorität: 05.02.1999 DE 19904689; 12.02.1999 DE 19905847
(43) Veröffentlichungstag der Anmeldung: 07.11.2001
(73) Patentinhaber: HORST SIEDLE GmbH & Co. KG., 78120 Furtwangen (DE)
(72) Erfinder: GLEIXNER, Franz, D-85244 Röhrmoos (DE)
(74) Vertreter: Jakelski, Joachim, Dr.
(86) Internationale Anmeldenummer: PCT/DE1999/004126
(87) Internationale Veröffentlichungsnummer: WO 2000/046574

(56) Entgegenhaltungen:
- WO-A-95/31696
- US-A- 4 005 396
- "Einrichtung zur Lagebestimmung" NEUES AUS DER TECHNIK, Nr. 6, 15. Dezember 1973 (1973-12-15), Seite 4 XP002137356

## Beschreibung

Die Erfindung betrifft einen Wegaufnehmer mit mäanderförmiger Meßwicklung nach der Gattung des Anspruchs 1.

Aus der deutschen Zeitschrift "NEUES AUS DER TECHNIK", Nr. 6, 15. Dezember 1973 (1973-12-15), Seite 4 XP002137356 "Einrichtung zur Lagebestimmung" ist die Verwendung von Mäanderschleifen mit unterschiedlichen Breiten der aufeinanderfolgenden Mäanderkurven zur Lagebestimmung bekannt. Bei dieser Anordnung zur Bestimmung der relativen Lage zweier Schlitten weist jeder Schlitten eine Mäanderwicklung auf. Die Mäanderwicklungen liegen in zwei parallelen Ebenen, der erste Mäander wird mit einem alternierenden Stromsignal angesteuert. Der zweite Mäander gibt dann ein alternierendes Signal ab, dessen Intensität ein Maß für die relative Lage der Schlitten ist. Um ein hohes Nullpunktsignal zu erhalten, wählt man für die jeweilige Breite aufeinanderfolgender Mäanderkurven und Intervalle zwischen Mäanderkurven unterschiedliche Abmessungen, beispielsweise sich vergrößernde Abmessungen. Auf diese Weise wird ein Signal erhalten, das in einem Nullpunkt hoch ist (viele Schenkel stimmen überein) und in allen anderen Punkten niedrig (höchstens einige Schenkel stimmen überein).

Aus der Patentanmeldung PCT/DE98/03753 geht ein Verfahren zur Messung von Wegen und/oder Winkeln hervor, das eine Meßschleife aufweist, in die ein beweglicher Meßkopf eine Spannung induziert, die durch Schaltungsmittel so geteilt wird, daß eine wegabhängige Wechselspannung an einen Meßausgang abgegriffen werden kann. Die Teilung erfolgt vorzugsweise mit Widerstandsnetzwerken oder einem Widerstandsbelag. Die Kennlinie einer derartigen Anordnung kann über die Meßstrecke nur in eine Richtung verlaufen. In manchen Anwendungen ist es erwünscht, nichtlineare Kennlinien mit Richtungsumkehr, z.B. eine Sinuskurve über den Weg oder Winkel nachzubilden.

Die vorliegende Erfindung betrifft einen Weg- und/oder Winkelsensor, bei dem eine Teilung des Wertes nicht erforderlich ist, sondern bei dem die Induktionsschleife so ausgebildet ist, daß an ihr eine Spannung entsteht, die von der Position des Meßkopfs abhängig ist und am Ende der Meßschleife abgegriffen werden kann.

Damit an einer Induktionsschleife eine wegabhängige induzierte Spannung abgegriffen werden kann, muß das Integral über das durch sie hindurchtretende Wechselfeld ebenfalls wegabhängig sein. Dies geschieht dadurch, daß der Meßkopf ein konstantes Wechselfeld erzeugt und die Meßschleife so ausgebildet wird, daß der durch sie hindurchtretende Anteil des Flusses, den der Meßkopf erzeugt, dem erwarteten positionsabhängigen Signal proportional ist.

Dies wird bei dem aus der DT 25 11 681 A1 hervorgehenden Wegaufnehmer dadurch erreicht, daß auf einer Fläche, durch die der Fluß hindurchtritt, eine mit dem Abstand vom Nullpunkt zunehmende Windungszahl aufgebracht wird und zusätzlich die einzelnen Windungen schräg in die Fläche hineinlaufen. Die Verwendung einer Meßschleife mit mehreren Windungen hat den Nachteil, daß die Wicklung vor allem bei einem Aufbau mit einer gedruckten Schaltung, wie sie vorzugsweise aus wirtschaftlichen und fertigungstechnischen Gründen ausgeführt wird, sehr breit wird, wenn eine größere Anzahl von Windungen notwendig wird. Damit ein kontinuierlicher Anstieg der Meßspannung mit zunehmender Position erreicht wird, muß möglichst im Abstand der Meßkernbreite eine weitere Windung aufgebracht werden. Der Meßkern muß die eine Seite der Spule so umfassen, daß alle Windungen durchflutet werden. Insbesonders bei großen Meßlängen kann dies dazu führen, daß der Meßkopf und die Meßschleife relativ groß werden, was sich sowohl auf die Kosten als auch auf die Einsatzmöglichkeiten ungünstig auswirkt. Es besteht die Möglichkeit, die Windungen, welche durch den Bereich des Luftspaltes treten, schräg verlaufen zu lassen. Dies hat den Nachteil, daß das Meßergebnis durch eine seitliche Verschiebung des Meßkopfs stark beeinflußt wird. Weiterhin ist es schwierig, die Steigung der Windung an den nicht ausreichend linearen Verlauf des induzierenden Magnetfelds anzupassen.

Ein weiterer Nachteil bei großen Meßlängen ergibt sich aus der Eigenkapazität und der Induktivität der Meßwicklung, welche dadurch eine relativ niedrige Resonanzfrequenz aufweist. Ein Betrieb im Bereich oder über der Resonanzfrequenz würde schwer zu behebende Meßfehler verursachen.

Diese Nachteile lassen sich dadurch beseitigen, daß die Meßschleife aus nur einer oder relativ wenigen Windungen besteht, die als Mäander ausgeführt sind. Der Mäander weist über den Meßweg gleiche Teilung auf, die Breite der einzelnen Teilstücke ändert sich jedoch mit der Position in Meßrichtung. Die Teilstücke des Mäanders, welche in den Bereich des Meßkerns hineinragen, werden vom Magnetfeld des Meßkerns durchflutet, während die übrigen Teile außerhalb des Magnetfelds liegen. Wenn nun das Verhältnis der Breite der Mäanderstücke, die in den Kernbereich hineinragen, zur Teilung des Mäanders proportional mit der gewünschten Kennlinie verläuft, wird eine Kennlinie erzeugt, die der gewünschten Kennlinie angenähert ist. Der Vorteil dieser Anordnung ist, daß es möglich ist, fast beliebig viele Windungsabschnitte quer zur Meßrichtung vorzusehen, ohne daß eine extreme Verbreiterung der Meßspule und eine hohe Induktivität und Eigenkapazität der Meßwicklung entsteht. Dies erlaubt die Verwendung eines schmalen und kurzen Meßkerns. Wenn eine ausreichende Zahl von Windungen vorliegt, ist es möglich, die Wicklung senkrecht zur Meßrichtung anzuordnen. Dadurch wird die Abhängigkeit vom Verlauf des Magnetfelds quer zur Meßrichtung erheblich verringert.

Weitere Vorteile und Merkmale der Erfindung gehen aus der nachfolgenden Beschreibung sowie der Zeichnung hervor.

Es zeigen:
- Fig. 1: schematisch eine Ausführungsform eines erfindungsgemäßen Meßwertaufnehmers;
- Fig. 2: schematisch die an dem in Fig. 1 dargestellten Meßwertaufnehmer abgreifbare Spannung sowie die magnetische Induktion;
- Fig. 3: schematisch die an dem in Fig. 1 dargestellten Meßwertaufnehmer auftretende Induktion;
- Fig. 4: eine andere Ausführungsform eines von der Erfindung Gebrauch machenden induktiven Meßwertaufnehmers;
- Fig. 5: schematisch ein Ausführungsbeispiel eines Meßwertaufnehmers.

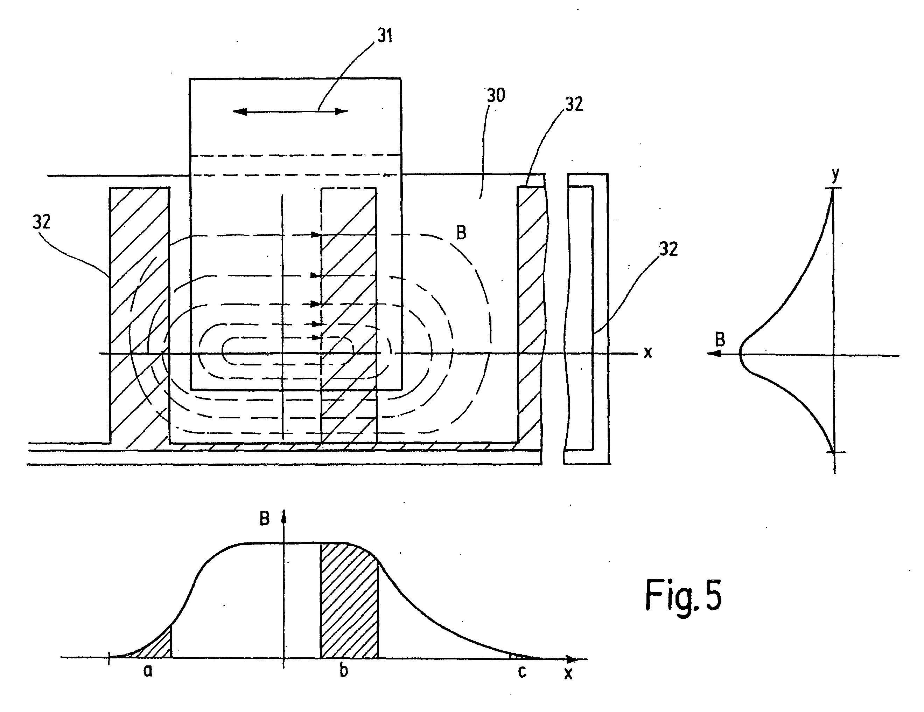

Fig. 5 zeigt eine Anordnung aus einem Kern 31 mit einem Luftspalt, in dem eine Leiterplatte 30 liegt. Im Kern wird durch eine stromdurchflossene Spule ein durch die Leiterplatte 30 hindurchtretendes Wechselfeld erzeugt. Mit den gestrichelten Linien sind die Linien gleicher Induktion gekennzeichnet. Die daneben und darunter liegenden Diagramme zeigen den Verlauf der Induktion in Richtung der Bewegung des Meßkopfs (x-Richtung) und quer dazu (y-Richtung). Ein streng linearer Verlauf läßt sich wegen der physikalischen Gegebenheiten nicht erzeugen. Dagegen läßt sich eine gute Symmetrie des Verlaufs in x-Richtung erreichen, nicht jedoch in y-Richtung. Um eine Empfindlichkeit gegenüber seitlichen Verschiebungen (y-Richtung) zu vermeiden, wird die Induktionsschleife so gestaltet, daß sie aus Leiterbahnen 32 besteht, die in Bewegungsrichtung des Meßkerns und senkrecht zur Bewegungsrichtung verlaufen, sodaß sie Rechtecke bilden, die tief in den Luftspalt des Meßkerns hineinragen und damit prakisch den ganzen Magnetfluß in diesem Bereich aufnehmen.

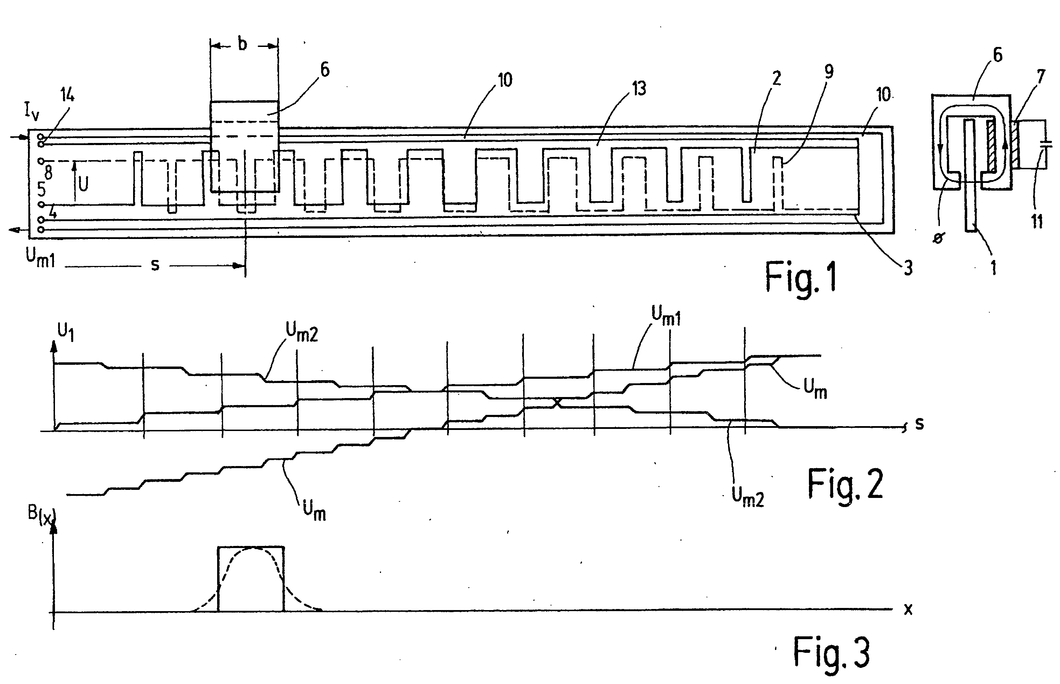

Fig. 1 zeigt einen derartigen Aufbau. Auf der Leiterplatte 1 befindet sich eine mäanderförmige Leiterbahn 2, dessen eines Ende über die Leiterbahn 3 an einen elektrischen Anschluß 4 geführt wird, und dessen anderes Ende an den Anschluß 5 geführt wird. Der Meßkern 6 weist eine Wicklung 7 auf, durch welche ein Wechselstrom fließt. Die Erzeugung dieses Wechselstroms wird hier nicht näher beschrieben. Sie geht beispielsweise aus der DE 197 57 689.3-52 sowie aus der PCT/DE98/03753 hervor, auf die vorliegend Bezug genommen wird.

Der Strom Iv in der Primärschleife 10 induziert über dem Meßkern 6 eine Spannung in der Wicklung 7, welche mit einem Kondensator 11 einen Resonanzkreis bildet. Der Erregerstrom kann allerdings auch anderweitig, z.B. durch Direktspeisung erzeugt werden. Der Kern umfaßt mit seinen Schenkeln die Leiterplatte 1, sodaß die Meßschleife von dem Magnetfluß des Meßkerns dort durchflutet wird, wo sie in den Bereich des Kerns hineinragt (rechts dargestellt). Die Teilung dieses Mäanders entspricht der magnetisch wirksamen Breite des Meßkerns 6 oder einem ganzzahligen Bruchteil davon. Zwischen den Anschlüssen 4 und 5 ergibt sich dann abhängig von der Position des Meßkerns eine Spannung Um1 wie sie in Fig. 2 dargestellt ist. Dabei wird stark vereinfachend angenommen, daß sich das Feld nur über die Breite des Meßkerns ausdehnt und dort über die ganze Breite gleich bleibt. Die Spannung Um1 steigt hierbei von 0 am Anfang des Meßwegs bei Erreichen des ersten schmalen in den Kern hineinreichenden Mäanderbereichs um einen Betrag 1/n linear an und bleibt dann konstant bis zum nächsten Teil. Am Ende des Wegs umfaßt die Meßschleife das ganze Feld des Meßkerns und gibt die volle Spannung ab.

In der Praxis ist der Übergang zwischen den einzelnen Teilbereichen nicht ganz so wie in Fig. 2 dargestellt, bei dem ein Verlauf des Magnetflusses wie in Fig.3 dargestellt angenommen wurde; vielmehr verläuft das Feld, wie in Fig. 5 dargestellt: Wegen der unvermeidlichen Streufelder wird der Magnetfluß auch seitlich in den Randbereichen austreten. Dies führt zu einem Verlauf, wie in Fig. 3 gestrichelt dargestellt. Die durchgezogene Linie stellt den idealisierten Verlauf dar, während die gestrichelte Linie den tatsächlichen Verlauf wiedergibt. Dadurch wird die in Fig. 2 dargestellte Kennlinie verschliffen, was zu einer Annäherung an einen stetigen Verlauf, im obigem Beispiel an einen linearen Verlauf führt. Zusätzlich kann durch eine gezielte Gestaltung des Luftspalts und/oder des Kernquerschnitts im Luftspalt eine ausreichend genaue Annäherung der Kennlinie an den gewünschten Verlauf erreicht werden.

Eine weitere Verbesserung ergibt sich durch die Verwendung einer zweiten Meßschleife z.B. auf der Rückseite der Leiterplatte 1. Wenn diese einen Mäander bildet, welcher um eine halbe Teilung versetzt ist, wird die Zahl der Übergänge verdoppelt, wenn das Ausgangssignal aus beiden Meßschleifen gebildet wird.

In Fig. 1 ist eine solche Leiterbahn 9 gestrichelt dargestellt. Sie ist an einem Ende an den gemeinsamen Anschluß 4 über Leiterbahn 3 angeschlossen, am anderen Ende an einen Meßanschluß 8. Entsprechend der Durchflutung der Leiterschleifen 3, 9 wird die Spannung Um2 induziert, wie sie in Fig. 2 dargestellt ist. Aus der Differenz zwischen den beiden Spannungen Um1 und Um2 wird die Spannung Um gebildet, welche die doppelte Anzahl an Übergängen aufweist und die doppelte Ausgangsspannung ergibt. Der Fehler durch die Übergänge wird dadurch halbiert. Das gleiche Ergebnis erhält man, wenn die beiden Meßschleifen in Reihe geschaltet sind. In diesem Fall müssen die Steigungen für beide Meßschleifen gleich verlaufen.

Eine weitere Verbesserung des Kurvenverlaufs ergibt sich durch eine engere Teilung des Mäanders, wobei die effektive Breite des Kerns ein ganzzahliges Vielfaches der Mäander-Teilung beträgt.

In der Praxis treten durch Temperatureinflüsse sowie seitliche Verschiebungen des Meßkerns Fehler auf. Diese Fehler können weitgehend vermieden werden, wenn nicht der Absolutwert der Meßspannung verwendet wird, sondern das Verhältnis aus einer Referenzspannung, welche den gesamten Fluß durch den Meßkern darstellt, und der an der Meßschleife anliegenden Meßspannung gebildet wird. Hier bietet es sich an, eine weitere Meßschleife vorzusehen, welche in Fig. 1 aus der Zuleitung 3 und einer Leiterbahn 13, welche auf einen Anschluß 14 führt, gebildet wird. Diese Schleife wird unabhängig von der Stellung des Meßkopf vom gesamten Fluß des Meßkopfs durchflutet, soweit er auch zur Induktion in die Meßschleife beiträgt. Die am Anschluß dieser Schleife liegende Spannung dient als Referenz für die vom Meßkern induzierte Gesamtspannung.

Bei diesem Meßverfahren lassen sich die in der DE 197 57 689.3-52 sowie der PCT/DE98/03753 beschriebenen Techniken, auf die vorliegend vollinhaltlich Bezug genommen wird und die in die vorliegende Anmeldung einbezogen wird, mitbenutzen:
Meßkern mit Resonanzspule
Anpassung an Oszillatorimpedanz mit Transformator
Verwendung des Schwingkreises als frequenzbestimmendes Bauteil einer Oszillatorschaltung
Verhältnismessung mit Referenzwicklung .
Kompensation der wegunabhängigen Induktionsspannung.

Die Methode der mäanderförmigen Induktionsschleife kann selbstverständlich auch mit einer Widerstandsschicht kombiniert werden, um z.B. eine Überprüfung der Funktion des Sensors vorzunehmen oder weitere Steuerinformationen zu gewinnen. Es läßt sich z.B. eine Sollwertkurve über den Weg, der mit dem Widerstandselement gemessen wird, oder ein zusätzliches Endlagensignal oder ähnliches erzeugen. Vorteilhaft ist hierbei, daß es möglich ist, über den gesamten Weg auch Steigungen unterschiedlicher Richtung darzustellen, was mit einer Widerstandsschicht nicht ohne weiteres zu verwirklichen ist.

Der Meßweg ist, wie auch das Meßverfahren mit einem Widerstandselement, nicht auf geradlinige Strecken beschränkt. Die Anordnung läßt sich ohne Schwierigkeiten in Kurvenverläufen einsetzen. Vorzugsweise sind dies Kreisbögen, etwa bei einer Winkelmessung.

Da das Flächenverhältnis des Mäanders über die Strecke beliebig variiert werden kann, ist es möglich, über den Meßweg hinweg beliebige Funktionen zu erzeugen, sofern die Steigung nicht einen Wert übersteigt, der durch die Kernbreite vorgegeben ist. Die maximal mögliche Steigung ist dabei Umax/b, wobei Umax die maximal erreichbare Meßspannung und b die Breite des Meßkerns darstellt.

Dies ist besonders in Anwendungen vorteilhaft, bei denen ein Drehwinkel über 360° ohne Begrenzung des Drehwinkels gemessen wird. Hier ist es notwendig, zwei Funktionen darzustellen, um eine eindeutige Zuordnung über den vollen Winkelbereich zu erzielen. Bekannte Ausführungen, z.B. Resolver, verwenden hier ein Ausgangssignal mit Sinusverlauf und ein weiteres mit Cosinusverlauf. Aus dem Verhältnis der beiden Ausgangsspannungen zueinander läßt sich eindeutig der Winkel über den Drehbereich errechnen. Dieses Verfahren ist nicht auf eine Sinusfunktion beschränkt.

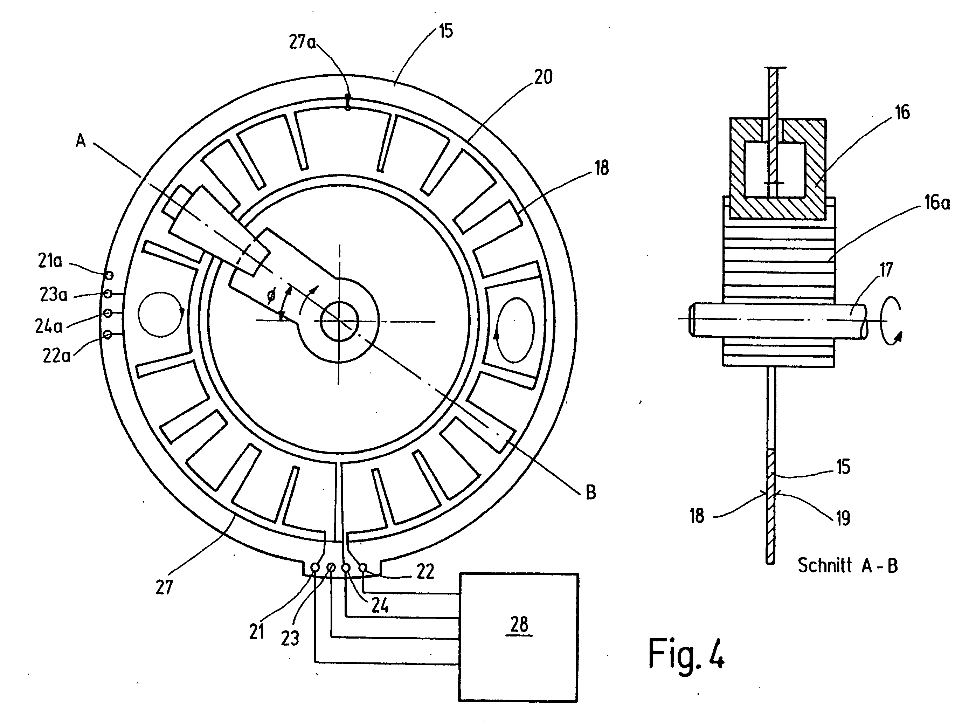

Fig. 4 zeigt einen schematischen Aufbau eines Winkelsensors zur Messung eines Winkels über einen Bereich von 360°. Auf einer drehbar gelagerten Welle 17 ist über eine Halterung 16a ein Meßkern 16 so angeordnet, daß eine feststehende ringförmige Leiterplatte 15, welche konzentrisch zur Welle angeordnet ist, im Luftspalt des Meßkerns 16 liegt. Wenn die Welle gedreht wird, überstreicht der Meßkern 16 Leiterbahnen 18 und 19.

Die beiden Leiterbahnen 18, 19 sind auf jeweils gegenüberliegenden Seiten der Leiterplatte 15 aufgebracht. Beide weisen eine gleiche Geometrie auf, sind jedoch um 90° versetzt. Auf der Oberseite ist die Leiterbahn 18 dargestellt. Diese ist in zwei Hälften aufgeteilt. In der Mitte ist sie über eine Leiterbahn 27, welche einen Kreis um die Leiterbahn 18 bildet und auf den Anschluß 23 geführt ist, an den elektrischen Bezugspunkt der Auswerteschaltung 28 angeschlossen. Die Leiterbahnen 18 und 27 sind auf ihrer den Anschlüssen 21, 22, 23, 24 gegenüberliegenden Seite durch eine Kontaktstelle 27a miteinander elektrisch leitend verbunden. An den zwei anderen Anschlüssen 21 und 22 wird das Meßsignal abgegriffen und ebenfalls an die Auswerteschaltung geführt. Die Leiterbahn 18 ist so gestaltet, daß je eine Schleife durch die Leiterbahnen 27 und 18 gebildet wird. Diese Schleife wird abhängig von der Winkelstellung ganz, teilweise oder gar nicht vom Magnetfluß des Meßkerns durchflutet. Dementsprechend wird dann eine Spannung induziert. Die Spannungen an den Anschlüssen 21 und 22 zeigen jeweils über 180° einen einer Sinuskurve angenäherten Verlauf. Die korrespondierenden Meßschleifen auf der Rückseite (Anschlüsse 21a, 23a, 24a, 22a) zeigen eine um 90° versetzte Sinuskurve, was einer Cosinusfunktion entspricht. Nach entsprechender Auswertung in einer nicht näher beschriebenen Elektronik läßt sich damit eine eindeutige Zuordnung des Winkels erreichen.

Zur genauen Anpassung an eine Sinuskurve oder einen anderen für die Auswertung vorgesehenen Verlauf kann ein entsprechend feineres Raster und/oder ein entsprechend geformter Meßkern und/oder eine elektronische Linearisierung vorgesehen werden. Für eine elektronische Linearisierung ist ein stetig steigender Meßwert erforderlich, der durch ein ausreichend feines Raster und/oder einen entsprechend geformten Meßkern erreicht wird.

## Patentansprüche

1. Induktiver Meßwertaufnehmer zur Bestimmung der Position eines gegenüber einem feststehendem Gehäuse (1) verschieblichen Körpers, **dadurch gekennzeichnet, daß** der verschiebliche Körper ein induktives Übertragungselement (6;16) aufweist, welches ein über einen begrenzten Bereich sich erstreckendes magnetisches Wechselfeld erzeugt und dieses Wechselfeld wenigstens eine mit dem Gehäuse (1) verbundene sich über die Meßlänge erstreckende Leiterschleife (2) ganz oder teilweise durchflutet, die eine Zuleitung (3) entlang des Meßwegs aufweist und deren Rückleitung so gestaltet ist, daß sie in regelmäßigen Abständen abwechselnd so geführt ist, daß sie abwechselnd nur geringfügig vom Wechselfeld des Übertragungselements (6) durchflutet wird und vom überwiegenden Teil des Wechselfelds durchflutet wird, und daß die Bereiche mit hoher Wechselfelddurchflutung eine dem gewünschten Positionswert zugeordneten erwarteten Ausgangswert proportionale Breite aufweisen und deren Ausgangsspannung an einen Ausgang (4,5) geführt ist.

2. Induktiver Meßwertaufnehmer nach Anspruch 1, **dadurch gekennzeichnet, daß** eine Referenzschleife (13) vorgesehen ist, die das ganze von dem Übertragungselement (6) erzeugte Wechselfeld einschließt und deren Ausgangsspannung als Referenz für die von der Leiterschleife erzeugte Spannung dient.

3. Induktiver Meßwertaufnehmer nach Anspruch 1 und 2, **dadurch gekennzeichnet, daß** wenigstens eine weitere Leiterschleife (9) vorgesehen ist, welche gegenüber der ersten versetzt angeordnet ist und deren Ausgangsspannung zur Ausgangsspannung der ersten Leiterschleife (2) addiert wird.

4. Induktiver Meßwertaufnehmer nach Anspruch 1 und 2, **dadurch gekennzeichnet, daß** wenigstens eine weitere Leiterschleife (9) mit umgekehrter Anordnung der vom Wechselfeld durchfluteten Bereiche vorgesehen ist, welche gegenüber der ersten versetzt angeordnet ist und daß der Meßwert die Differenz der beiden Ausgangsspannungen ist.

5. Induktiver Meßwertaufnehmer nach einem der Ansprüche 1 bis 4, **dadurch gekennzeichnet, daß** mehrere unabhängige Meßschleifen zur Gewinnung von Meßwerten vorgesehen sind.

6. Induktiver Meßwertaufnehmer nach einem der Ansprüche 1 bis 5, **dadurch gekennzeichnet, daß** das induktive Übertragungselement einen Meßkern (6) aus einem Material hoher Permeabilität aufweist, der so gestaltet ist, daß sich der Anstieg oder Abfall des Wechselfelds über die Breite eines von dem Meßkern (6;16) gebildeten Luftspalts in Meßrichtung über eine Länge erstreckt, welche der Teilung der Meßschleife(n) (13,9) entspricht, und daß die wirksame Länge der doppelten Teilung der Meßschleife oder einem ganzzahligen Vielfachen davon entspricht.

7. Induktiver Meßwertaufnehmer nach einem der Ansprüche 1 bis 5, **dadurch gekennzeichnet, daß** das induktive Übertragungselement einen Meßkern (6) aus einem Material hoher Permeabilität aufweist, dessen Kernquerschnitt im Luftspalt und/oder dessen Luftspalt so gestaltet ist, daß der Verlauf der Induktion in Meßrichtung so ansteigt oder abfällt, daß bei Überfahren des den Meßkern (6;16) enthaltenden induktiven Übertragungselements die über die Breite der Leiterschleife entlang einer Linie quer zum Meßweg gemittelte Induktion über einen Weg mit der Teilung der Meßschleife angenähert linear ansteigt bzw. abfällt.

8. Induktiver Meßwertaufnehmer nach einem der Ansprüche 1 bis 7, **dadurch gekennzeichnet, daß** die Meß-, bzw Referenzschleife (18,27) auf einer Kreisbahn angeordnet sind und das induktive Übertragungselement (16) drehbar angeordnet ist, so daß die Anordnung zur Messung von Winkeln verwendet werden kann.

9. Induktiver Meßwertaufnehmer nach Anspruch 8, **dadurch gekennzeichnet, daß** wenigstens zwei Meßschleifen (18,19) vorgesehen sind, die sich über einen Winkel von 360° erstrecken und über diesen Meßwinkel zugeordnet Meßwerte abgeben, an deren Verhältnis zueinander der Meßwinkel eindeutig bestimmbar ist.

10. Induktiver Meßwertaufnehmer nach Anspruch 9, **dadurch gekennzeichnet, daß** die Ausgangsspannungen zweier oder mehrerer Meßschleifen phasenverschobenen Sinusfunktionen angenähert sind.

## Claims

1. An inductive sensor for determining the position of a body which is displaceable with respect to a stationary housing (1), **characterized in that** the displaceable body has an inductive transmission element (6; 16), which generates an alternating magnetic field extending over a limited region and some or all of the flux of this alternating field permeates at least one conductor loop (2) connected to the housing (1) and extending over the measurement length, which loop has a feed line (3) extending along the measurement path and the return line of which is designed so that its path alternates at regular intervals in such a way that alternately only a small amount of the flux of the alternating field of the transmission element (6) permeates it or so that most of the flux of the alternating field permeates it, and the areas permeated by large amounts of flux of the alternating field have a width which is proportional to the expected output value associated with the desired position value and the output voltage of these areas is sent to an output (4, 5).

2. An inductive sensor according to Claim 1, **characterized in that** a reference loop (13) is provided which includes the entire alternating field generated by the transmission element (6), the output voltage of this loop being used as a reference for the voltage generated by the conductor loop.

3. An inductive sensor according to Claim 1 and 2, **characterized in that** at least one additional conductor loop (9) is provided, which is offset with respect to the first, and its output voltage is added to the output voltage of the first conductor loop (2).

4. An inductive sensor according to Claim 1 and 2, **characterized in that** at least one additional conductor loop (9) with an opposite arrangement of the areas permeated by the flux of the alternating field is provided, which conductor loop (9) is offset with respect to the first, and the measurement value is the difference between the two output voltages.

5. An inductive sensor according to one of Claims 1 to 4, **characterized in that** a plurality of independent measuring loops for obtaining measurement values are provided.

6. An inductive sensor according to one of Claims 1 to 5, **characterized in that** the inductive transmission element comprises a measurement core (6) of a material of high permeability which is designed in such a way that the rise or fall of the alternating field across the width of an air gap formed by the measurement core (6; 16) extends over a length in the measuring direction which corresponds to the pitch of the measuring loop(s) (13, 9), and the effective length corresponds to twice the pitch of the measuring loop or to a whole-number multiple thereof.

7. An inductive sensor according to one of Claims 1 to 5, **characterized in that** the inductive transmission element comprises a measurement core (6) of a material of high permeability, the core cross-section of which in the air gap and/or its air gap is designed in such a way that the course of the induction in the measuring direction rises or falls in such a way that, when the inductive transmission element containing the measurement core (6; 16) passes over, the induction averaged over the width of the conductor loop along a line transverse to the measurement path rises or falls in an approximately linear manner over a distance equal to the pitch of the measuring loop.

8. An inductive sensor according to one of Claims 1 to 7, **characterized in that** the measuring and reference loops (18, 27) are arranged on a circular path, and the inductive transmission element (16) is arranged so as to be rotatable, so that the arrangement can be used to measure angles.

9. An inductive sensor according to Claim 8, **characterized in that** at least two measuring loops (18, 19) are provided, which extend over an angle of 360° and yield measurement values in an associated manner over this measurement angle, the ratio of these values to each other being capable of being determined in an unequivocal manner.

10. An inductive sensor according to Claim 9, **characterized in that** the output voltages of two or more measuring loops approximate out-of-phase sine functions.

## Revendications

1. Transducteur inductif pour déterminer la position d'un corps mobile par rapport à un boîtier (1) fixe,
**caractérisé en ce que**
le corps mobile présente un élément de transmission inductif (6 ; 16) qui produit un champ magnétique alternatif qui s'étend dans une zone limitée et ce champ alternatif traverse entièrement ou partiellement au moins une boucle de conducteur (2) qui s'étend sur toute la longueur de mesure, qui est liée au boîtier (1) et qui présente une ligne d'arrivée (3) le long du trajet de mesure et dont la ligne de retour est structurée de telle sorte qu'elle est guidée alternativement dans des écarts réguliers et qu'alternativement elle n'est traversée que légèrement par le champ alternatif de l'élément de transmission (6) et est traversée par la majeure partie du champ alternatif , et les zones où le flux de champ alternatif est important présentent une largeur proportionnelle à la valeur de sortie escomptée associée à la valeur initiale souhaitée et leur tension de sortie est conduite à une sortie (4,5).

2. Transducteur inductif selon la revendication 1,
**caractérisé en ce que**
l'on prévoit une boucle de référence (13) qui comporte tout le champ alternatif produit par l'élément de transmission (6) et dont la tension de sortie sert de référence à la tension produite par la boucle de conducteur.

3. Transducteur inductif selon les revendications 1 et 2,
**caractérisé en ce que**
l'on prévoit au moins une autre boucle de conducteur (9) qui est disposée en décalage par rapport à la première et dont la tension de sortie est additionnée à la tension de sortie de la première boucle de conducteur (2).

4. Transducteur inductif selon les revendications 1 et 2,
**caractérisé en ce que**
l'on prévoit au moins une autre boucle de conducteur (9) dont la disposition des zones traversées par le champ alternatif est inversée et qui est disposée en décalage par rapport à la première, et la valeur mesurée est la différence des deux tensions de sortie.

5. Transducteur inductif selon l'une des revendications 1 à 4,
**caractérisé en ce que**
l'on prévoit plusieurs boucles de mesure indépendantes pour obtenir les valeurs mesurées.

6. Transducteur inductif selon l'une des revendications 1 à 5,
**caractérisé en ce que**
l'élément de transmission inductif présente un noyau de mesure (6) constitué d'un matériau à forte perméabilité qui est conçu de telle façon que l'augmentation ou la diminution du champ alternatif sur la largeur d'un entrefer formé par le noyau de mesure (6 ; 16) s'étend en direction de mesure sur une longueur qui correspond à la répartition de la (des) boucle(s) de mesure (13, 9) et la longueur active correspond au double de la répartition de la boucle de mesure ou à un multiple entier de celle-ci.

7. Transducteur inductif selon l'une des revendications 1 à 5,
**caractérisé en ce que**
l'élément de transmission inductif présente un noyau de mesure (6) constitué d'un matériau à forte perméabilité dont la section transversale du noyau dans l'entrefer et/ou dont l'entrefer est conçu de telle manière que le flux de l'induction en direction de mesure augmente ou diminue de telle sorte que, lorsqu'on passe au-dessus de l'élément de transmission inductif contenant le noyau de mesure (6 ; 16), l'induction moyenne sur la largeur de la boucle de conducteur le long d'une ligne transversale à la trajectoire de mesure augmente ou diminue sur une trajectoire de façon approximativement linéaire avec la répartition de la boucle de mesure.

8. Transducteur inductif selon l'une des revendications 1 à 7,
**caractérisé en ce que**
la boucle de mesure ou la boucle de référence (18, 27) est disposée sur une trajectoire circulaire et l'élément de transmission inductif (16) est disposé de façon à pouvoir tourner, de sorte qu'on peut utiliser l'arrangement pour mesurer des angles.

9. Transducteur inductif selon la revendication 8,
**caractérisé en ce que**
l'on prévoit au moins deux boucles de mesure (18, 19) qui s'étendent sur un angle de 360° et qui indiquent des valeurs associées sur cet angle de mesure dont le rapport permet de déterminer de façon univoque l'angle de mesure.

10. Transducteur inductif selon la revendication 9,
**caractérisé en ce que**
les tensions de sortie de deux ou de plusieurs boucles de mesure sont approchées par des fonctions sinusoïdales décalées en phase.
